# EUROPEAN PATENT APPLICATION

(11) **EP 2 653 287 A1**
(43) Date of publication of application: **23.10.2013**
(21) Application number: 12164924.8
(22) Date of filing: 20.04.2012
(51) Int. Cl.: B29C 47/00, B29C 44/56

(54) **Insulating panel and method of manufacturing of the same**

(71) Applicant: URSA Insulation, S.A., 28004 Madrid (ES)
(72) Inventor: Amor Chico, Francisco Javier, 19162 Pioz, Guadalajara (ES); Casado Dominguez, Arturo Luis, 28680 Paracuellos de Jarama, Madrid (ES); Figueras Nadal, Laura, 43002 Tarragona (ES)
(74) Representative: HOFFMANN EITLE

(57) **Abstract**

The present invention refers to a foam insulating panel, in particular an extruded polystyrene panel of at least one extruded polystyrene board (so-called XPS-board), as well as a process of manufacturing such panels and the use of such panels for different insulation applications, specifically for insulating buildings. According to the present invention, a plurality of extruded foamed boards having main surfaces and narrow surfaces are provided, wherein the plurality of extruded foam boards are joined on the main surfaces to each other. Further, the main surfaces of the plurality of extruded foamed boards extend approximately in the thickness direction (t) of the foam insulating panel.

## Description

The present invention refers to a foamed insulating panel, in particular an extruded polystyrene panel of at least one extruded polystyrene board (so-called XPS-board), as well as a process of manufacturing such panels and the use of such panels for different insulation applications, specifically for insulating buildings.

### State of the art

A general objective in the field of foamed insulating panels is to achieve panels with high thermal resistance. The thermal resistance R (m²·K/W) is defined by R=d/λ, wherein d (m) is the thickness of the material and λ (W/m·K) is the thermal conductivity.

To achieve a higher thermal resistance R, the λ-value of an insulating panel should be reduced and/or the thickness "d" of the material should be increased. However, both concepts are in the field of foamed insulating panels, in particular extruded polystyrene boards, in conflict with each other, because thick foamed insulating panels cannot be produced as one strand with a low λ-value. If a strand with higher thickness is produced using a commonly known extrusion technique, the λ-value is higher than the λ-value of thinner strands. In this sense, strands which are referred to as "strands with higher thickness" typically means strands with a thickness equal or greater than 160 mm.

One approach to resolve this conflict is, therefore, to produce thinner foam boards, and connect each of the foam boards to each other so as to achieve a multilayer panel, in other words to build a sandwich structure.

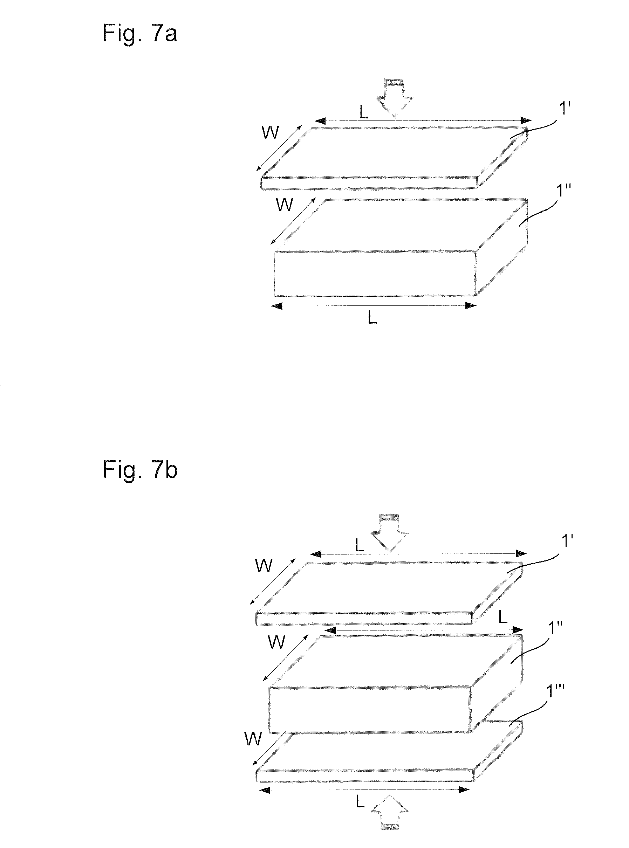

It is commonly known to manufacture foamed multilayer insulating panels, wherein individual foamed boards (XPS-boards) are cut to a specific size, and hereafter the single XPS-boards are joined on their main surfaces. In this context the main surfaces are understood as the surface area which is formed by the length of the individual and the final board respectively, and which extends in the extrusion direction multiplied by the respective width of the individual and the final board. The final boards which are composed of such multilayer-sandwich structures are for example shown in figures 7a and 7b of the present application. The thickness of the different individual boards to be joined can be of the same or of different values.

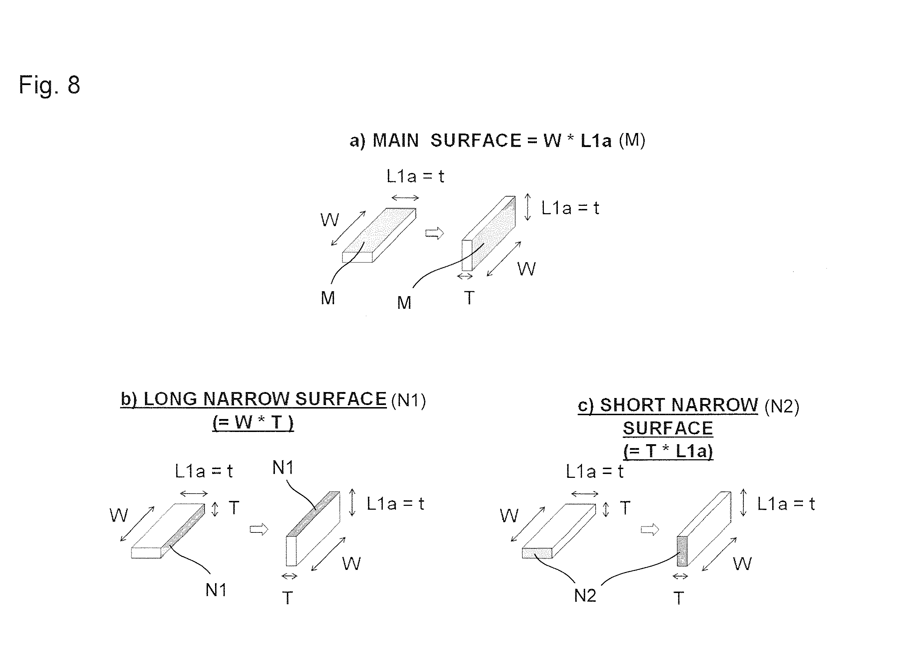

In the example shown in figure 7a, a foamed insulating panel is formed by joining two XPS-boards 1' and 1" on their main surfaces. Figure 8b illustrates another example of a foamed insulating panel, wherein three individual XPS-boards 1', 1" and 1"' are joined on their main surfaces so as to form a final foamed insulating panel.

To join the single layers so as to achieve a multilayer foamed insulating panel, mechanical joints, adhesives, solvents or glues or different co-extrusion procedures are known. Because such multilayer panels comprise a higher thickness, the thermal resistance is increased while keeping the λ-value low, being equal to the value of the single layer panels.

As one prior art document EP 1 318 164 A1, refers to a welding method for connecting thin XPS-boards. In one specific example, two XPS-boards having a thickness of 80 mm and a density of 35 g/l (which corresponds to a density of 35 kg/m³) are coated on one surface with a mixture of N-methylpyrrolidone and ethanol. After a specific reaction time of 2 minutes, the plates were pressed to each other using a pressure of 100 bar.

As another prior art document, WO 2006/056387 refers to an insulating board, in particular for insulating walls or roofs of buildings, wherein a part of the insulating board contributes to the insulating property, while the other part of the insulating board contributes to protection of the insulating board. In a specific example, two XPS-boards were connected to each other on one of the main surfaces, respectively. Using a thermal connection, both boards are fixed to each other.

Another prior art document EP 1 471 125 Al, refers to thick plastic foam panels obtained by the joint of at least two parts. The water diffusion through the thick panel has to be ensured when the final panel is expected to be used on insulation. According to this invention, the diffusion through the surfaces of the final panels is ensured as the invention uses skin free panels, and a diffusion open adhesive, a hotmelt and/or a reactive adhesive, is used.

Another prior art document WO 2012/016991 refers to a composite XPS thermal insulation board which may comprise a bottom, a central and a top XPS board having an extrusion skin at each external face of the composite XPS board with the individual XPS boards secured together to form the composite XPS board by thermal welds at their contact faces.

Another prior art document, EP 2 348 066 A2 refers to enhancing the insulating properties of rigid foamed polymeric boards by reducing cell anisotropic ratio and by increasing the cell orientation ratio. In particular, this document relates to rigid extruded polystyrene foam boards, wherein a low cell anisotropic ratio or high cell orientation ratio (= x/z ratio) is achieved so as to increase the thermal insulating value (i.e. the thermal resistance R) of the rigid foam board. One approach is the possibility of changing the value of the x/z ratio, whereas x describes the cell dimension in machine direction (also referred to as extruded direction) and z describes the cell dimension in thickness direction of the foamed boards. In other words, the z-direction is the direction perpendicular to the x and the y-direction, whereas the y-direction is the direction corresponding to the width of the foamed board. An improvement of the x/z ratio is obtained by changing the extrusion conditions, for example the speed of the output line in combination with the die opening. To achieve panels having a cell orientation ratio in the x/z direction of between 1.03 and 2, the gap between the lips and/or the shaper plates of the die are opened wider compared to those produced in the prior art. Accordingly, materials with greater thickness are achieved. The line speed, or takeaway speed of the conveyor is then used to pull out the boards to a desired thickness.

For materials having a cell orientation ratio in the x/z direction between 0.97 and 0.6, the gap of the die lips and/or shaper plates of the die are closed and the conveyor line speed is decreased to cause the cells to grow in the z-direction. Such materials have enhanced compressive strength, but reduced thermal resistance.

As a further prior art document, WO 2012/016991 A1 refers to composite XPS thermal insulation panels. Such composite XPS boards consist of top, central and bottom XPS boards, wherein the individual XPS boards are preferably welded together simultaneously to produce the composite XPS board. The thermal welds may be created using a weld bar or bars passing over and preferably contacting and pressing against a surface to be welded. Preferably, the weld bars are stationary with relative movement with respect to the surface to be welded. In one embodiment, each heating surface of the weld bar comprises granulations, which have the form of v-shaped teeth forming v-shaped peaks and troughs. Alternatively, the granulations may take the form of a series of square and/or rectangular shaped teeth.

### Summary of the invention

It is an objective of the present invention to provide a foamed insulating panel with increased thermal resistance R at low costs, wherein in particular the λ-value of the final panel is reduced, and the thickness of the foamed insulation panel is increased, while the compressive strength and other requirements like the fire classification are maintained.

These objects are achieved by providing a foamed insulating panel according to claim 1, a process for manufacturing a foamed insulating panel according to claim 7 and the use of the panel for different insulation purposes according to claim 15.

The main idea of the present invention is to provide a so-called vertical sandwich board (VSB), which comprises several single insulating boards connected to each other on their main surfaces (M), wherein the main surfaces (M) of insulating boards extend essentially in the thickness direction (t) of the finalized foamed insulating panel.

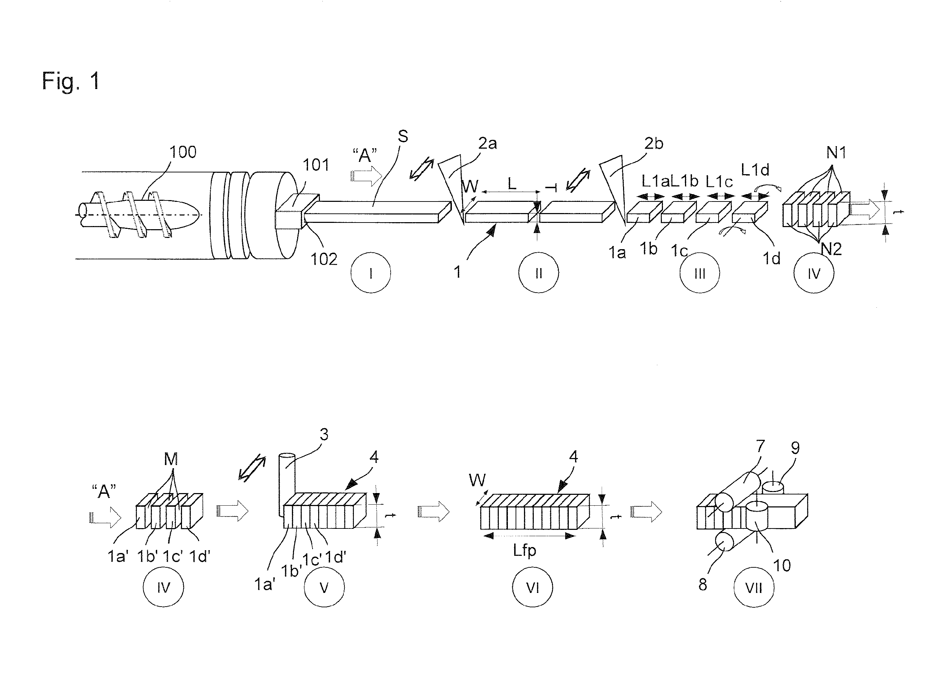

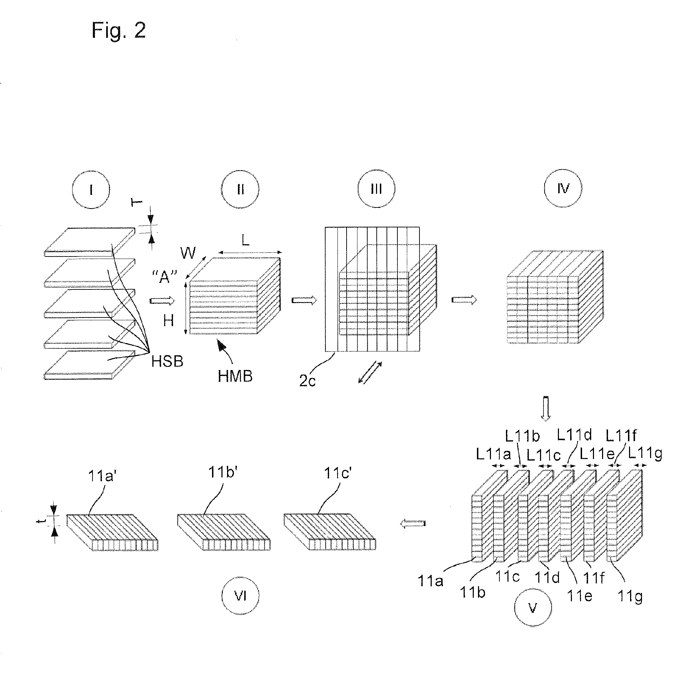

The term "thickness" or "thickness direction" (T) used with respect to a strand refers to the direction perpendicular to the extruding and conveying direction, see also arrow "A" in Figs.1 and 2. The "thickness" or "thickness direction" (t) of the foamed insulating panel refers to the direction which defines the insulating direction of the foamed insulating panel - i.e. the final product - during use (see step -V in Figs. 1 and step VI in Fig. 2 in conjunction with Figure 8). In other words, the insulation effect is achieved by suppressing or impeding the heat flow in the thickness direction (t) of the final foamed insulating panel.

Further, the terms "main surface" and "narrow surface" are used. The "main surface M" of a single foamed board refers to the surface having an increased area in comparison to the narrow surfaces. The "main surface M" of the single extruded foamed board (1a) in Fig. 1 is formed by the area defined by the product of width (W) multiplied by the length (L1a) of such single extruded foamed board (see Fig. 8a). The "narrow surface" of the single extruded foamed board is referred to either the "long narrow surface N1" or the "short narrow surface N2". The "long narrow surface N1" is defined by the product of width (W) multiplied by the thickness (T) of the extruded strand (see Fig. 8b). The "short narrow surface N2" is defined by the strand thickness (T) multiplied by the single foam length L1a, L1b, L1c L1d, L11a, L11b, L11c, L11d, L11e, L11f, L11g (see Fig. 8c).

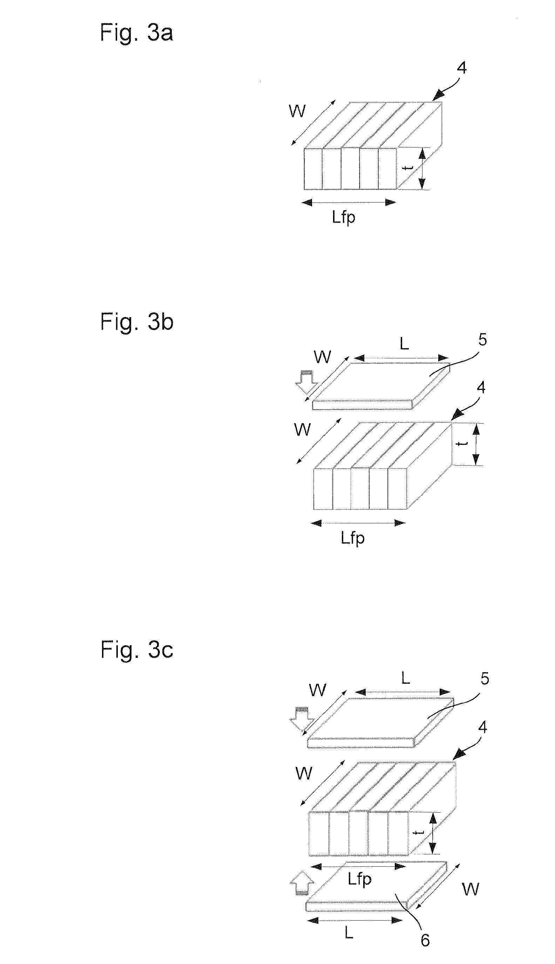

Further, the terms "large surface" and "small surface" are used. The "large surface" of a final foamed insulating panel (= Vertical Sandwich Board) refers to the surface having an increased area in comparison to the small surfaces. The "large surface" of the final foamed insulating panel (step VI in Fig. 1) is formed by the area defined by the product of width (W) multiplied by the length (Lfp) of final foamed insulating panel. The final foamed insulating panel has a "top large surface" and a "bottom large surface". The length of the final foamed insulating panel (Lfp) is formed by a plurality of single foamed boards, each having the individual length (T) and the common thickness (t). Therefore the length of the final foamed insulating panel (Lfp) equals the amount of single foamed boards 1a, 1b, 1c, 1d, 11a, 11b, 11c, 11d, 11e, 11f, 11g times the individual thickness (T) of each single foamed board, which again corresponds to the thickness of the strand (T) of single foamed board (see for example Figure 1). The "large surface" of a final foamed insulating panel may either be formed the plurality of long narrow surfaces N1 (either treated with an additional treatment or not), or by an additional extruded foamed board (reference signs 5, 6 in a later discussed preferred embodiment of Figures 3b and 3c). For the latter case, the number of any additional extruded foamed board is not limited.

The "small surface" of the final foamed insulating panel, which is either formed of the plurality of extruded foam boards, or the plurality of extruded foam boards with one or more additional elements added to the plurality of extruded foam boards, is referred to as either the "lateral long surface" or the "lateral short surface". The "lateral short surface" equals the product of the thickness of the final insulating panel (t) (which corresponds to the length L1a, L1b, L1c, L1d, L11a, L11b, L11c, L11d, L11e, L11f, L11g) multiplied with the width of the foamed strand (W). The "lateral long surface" equals the product of the thickness of the final insulating panel (t) (which corresponds to the length (L1a, L1b, L1c, L1d, L11a, L11b, L11c, L11d, L11e, L11f, L11g)) multiplied with the length of the final foamed insulating panel (Lfp). Either one or both of the "lateral long surface" or the "lateral short surface" may be heat treated.

The width of the extruded strand corresponds with the width of the single foamed board and it also corresponds with the width of the final foamed insulating panel (W). The final foamed insulating panel is also referred to as foamed insulating panel (see Figure 1).

If the final foamed insulating panel does not have an additional extruded foam board 5,6 (i.e. a so-called horizontally extended board as shown in Fig. 3b and 3c) being attached to the long narrow surfaces of the plurality of extruded foam boards, i.e. if the final foamed insulating panel consists only of several single insulating boards connected to each other on their main surfaces (Fig. 3a), wherein the main surfaces of insulating boards extend approximately essentially in the thickness direction (t) of the finalized foamed insulating panel, then the final foamed insulating panel corresponds with the Vertical Sandwich Board (VSB)(see "4" in Fig 3a). In all other cases, the final foamed insulating board is an assembly made of a Vertical Sandwich Board (VSB) (see "4" in Fig. 3b and 3c) and of at least one horizontally extending board (see "5", "6" in Fig. 3b and 3c) being attached to at least one of the "large surfaces" of the Vertical Sandwich Board).

The present invention refers to a foamed insulating panel, in particular an extruded polystyrene panel, the foamed insulating panel comprising a plurality of extruded foamed boards, which are joined on their main surfaces to each other. The present foamed insulating panel is characterized in that the main surfaces M (W x t; t = L1a, L1b, L1c, L1d; L11a, L11b, L11c, L11d, L11e, L11f, L11g) of the plurality of extruded foam boards extend essentially in the thickness direction of the foamed insulating panel.

In summary, a so-called vertical sandwich board (VSB) is achieved, wherein the orientation of the plurality of extruded foam boards is changed with respect to a standard assembly. In this sense, a "standard assembly" is understood as a foamed strand or panel which is produced with the conventional XPS technology and whereas the foamed strand is conveyed in the extruded direction (direction "A", see Fig. 1 and cut in width direction of the strand in order to obtain standard panels with the length L. The thickness of such conventional panels coincides basically with the thickness of the foamed strand (T). After cutting the boards to length (in order to obtain so-called conventional horizontally extending panels) and machining their surfaces, the final thickness of such conventional boards is slightly smaller than the thickness (T) of the strand. Therefore, the thickness (T) either refers to the thickness of the strand or the thickness of horizontally extending panels. The "thickness" or "thickness direction" (T) of such conventional foamed insulating panel refers to the direction which defines the insulating direction of the foamed insulating panel - i.e. the final product - during use. For inventive final foamed insulating panels, the insulation effect is achieved by suppressing or impeding the heat flow in the thickness direction (t) of the final foamed insulating panel.

Those standard panels correspond with standard final foamed boards which are ready for use, after all sides have been machined and the board has been stabilized. In order to stabilize a XPS panel, it needs to be stored so that a gas exchange will be enabled between the blowing agent being trapped in the foamed strand or panel respectively and the ambient atmosphere. Blowing agents might be inorganic blowing agents, e.g. carbon dioxide, nitrogen, argon etc., organic blowing agents, e.g aliphatic hydrocarbons, fluorocarbons, chlorocarbons and chlorofluorocarbons etc. and chemical blowing agents e.g. azodicarbonamide, azodiisobutyro-nitrile, benzenesulfonhydrazide. The stabilization process is considered to be finished, if an equilibrium between escaping blowing agent and the ambient atmosphere has been obtained. As a result of this equilibrium state of the foamed panel no relevant further changes with respect to the λ-value and the dimensions of the panel are expected to occur.

The surprising effect involved with the inventive configuration is that an alternative and cost-effective way of manufacturing extruded polystyrene panels could be found, whereas the λ-value of the finalized foamed insulating panel can be reduced, which again leads to a higher thermal resistance R without the need of increasing the thickness of the foamed insulating panel. Even more, because the λ-value is reduced, thinner boards may be produced without reducing the R value. If, on the other hand, the thickness of the foamed insulating panel is increased as well, both the increased thickness and the reduced λ-value contribute to a significant boost of the thermal resistance, i.e. of the R-value. The inventive VSB design results in foamed insulating panels which do not hold the typical restraints regarding the maximum obtainable thickness, as any desired final panel thickness can be produced without suffering a quality decrease which happens if conventional procedures are applied and which automatically lead to an increase of the λ-value.

Further, the compressive strength of such a panel is kept constant. Surprisingly it has also been found, that the bonding operation can be done with the use of glues which are either open to diffusion or not open to diffusion. As the bonding surface extend essentially in the thickness direction of the finalized foamed insulation panel, the film of glue or adhesive will not form a diffusion barrier in the direction of the heat flow, as the film of glue extends parallel to the heat flow and not perpendicularly thereto. Furthermore there is no need to change the conventional extrusion conditions.

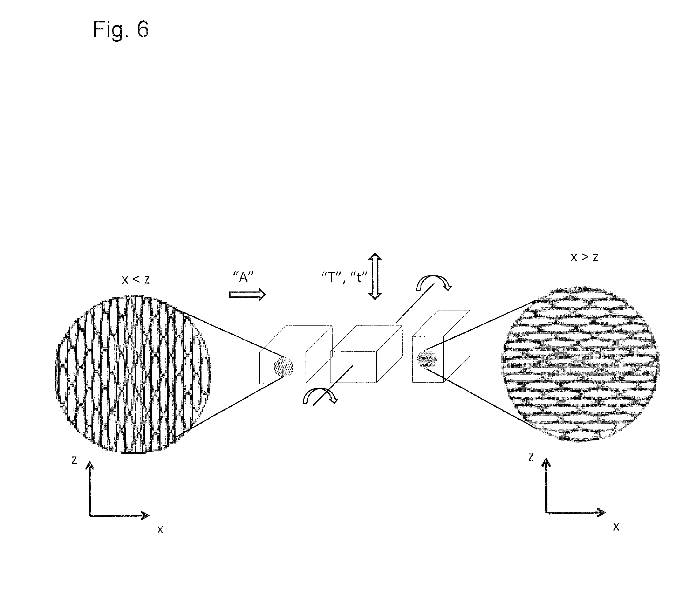

Because of the manner in which the blowing agent escapes during the extruded foam manufacturing process, the cells often take an oblong shape in the z-direction (= thickness direction), when applying conventional extrusion conditions. Inventive foamed insulation boards are manufactured under those conventional extrusion conditions, which can be more easily controlled compared to the proposed procedure described in EP 2 348 066 A2. In order to achieve a final insulating board with improved λ-value (and also R-value), inventive foamed strands are segmented and the segmented foam boards are reoriented (i.e. turned by 90° around the axis extending in width direction, see Fig. 1) in such a way to obtain a cell orientation having the desired oblong shape in x-direction (see Fig. 6). To this end, the main surfaces of the plurality of extruded foam boards extend essentially in the thickness direction (t) of the foam insulating panel.

For the λ-measurement a heat flow in the direction (t) is applied which also corresponds with z-direction of the cells. In other words it is intended that the heat flows perpendicular to the x-direction in order to obtain the inventive effect. To this end, the cells need to have oblique shape, which means if the cells are considered in a simplified manner to have approximately elliptical shape, the long axis of an ellipse extends in x-direction. Fig.6, gives a schematic representation of the cell shape and orientation to illustrate the principle of the cell reorientation obtained by applying the inventive manufacturing process of VSB-panels.

When inventive VSB panels are used, they need to be applied and/or assembled with the construction so that the direction of the heat flow during application occurs in thickness direction (t) of the VSB panel which coincides with the z-direction of the cell orientation. For this purpose, the so-called one of the large surfaces of an inventive final foamed insulating panel need to be attached to the wall of a building. For other applications like, e.g. refrigerating chambers, the same methodology of attachment, i.e the same type of alignment of the inventive final foamed insulating panel relative to the wall to be insulated has to be applied.

In a preferred embodiment, an additional extruded foam board is attached to the narrow surfaces, in particular the long narrow surfaces N1, of the plurality of extruded foam boards, in particular by using an adhesive or a solvent. The sum of (long) narrow surfaces (N1) of the plurality of extruded foamed boards represent either the large top surface or the large bottom surface of the Vertical Sandwich Board VSB). Because the foamed insulating panel according to this embodiment additionally comprises one or two additional extruded foamed boards being applied to the either one or both large surfaces of the Vertical Sandwich Board (VSB), and because those additional boards increase the thickness of the final foamed insulating panel (i.e. in addition to the thickness (t) established by the plurality of extruded foam boards), additional reinforcement is provided. In other modifications, more than one additional extruded foam boards may be attached to one or both large surfaces of the VSB-board.

The at least one additional extruded foam board has preferably a smaller thickness than the thickness of each of the plurality of extruded foam boards forming the foam insulating panel. The thickness (T) of each of the plurality of extruded foam boards forming the foam insulating panel is, in turn, preferably approximately the same, for example within a range of 10 - 200 mm. A preferred thickness (T) range is 30-160 mm, in particular 30 mm, 50 mm, 60 mm, 100 mm or 160 mm. The most preferred range thickness (T) range is 40 - 100, as boards of this thickness can be easily obtained with good λ-values. In particular, the plurality of extruded foam boards is achieved from a common strand, which is cut so as to achieve the plurality of extruded foam boards. Alternatively, boards from different strands may be used, and the boards may have different thicknesses (T). The benefit of using only extruded foam boards having the same thickness (T) is that the resulting VSB will have a uniform λ-value (and also R_-value) in direction of the length of the Vertical Sandwich Board.

In a further embodiment, at least several of the plurality of extruded foam boards comprises a tongue and/or groove on their main surfaces. The tongue and/or groove structure (which is also referred to as male and female design) may provide additional mechanical anchorage between the plurality of extruded foam boards, which again leads to an increased strength of the final foamed insulating panel.

In a further embodiment, the foamed insulating panel comprises at least on the small faces of the foamed insulating panel a skin-treated surface. Additionally, the large surfaces of the foam insulating panel may also be skin-treated. Preferably, the treatment refers to a heat treatment so that the foamed insulating panel comprises closed surfaces, i.e. the plurality of single foam boards does not appear to be visible after applying such skin-treatment, especially after applying such heat treatment.

Preferably, the final foamed insulating panel has a thickness (t), which is within a range of 100-400 mm. Nevertheless inventive embodiments are not limited to this thickness range, i.e. also thinner, but especially thicker final foamed insulating panels can be produced without being detrimental for the quality determining parameters (λ-value and also R-value), of such inventive foamed insulation boards. The thickness (t) of the foamed insulating panel is defined by the length of the plurality of extruded foam boards (L1a, L1b, L1c), which are joined on their main surfaces to each other. Increasing the length of each of the plurality of extruded foam boards, therefore, leads to an increased thickness of the foamed insulating panel, i.e. of the VSB.

The present invention further refers to a method for forming a foamed insulating panel, in particular an extruded polystyrene board. The method according to the present invention comprises the following steps: (a) directing a plastic melt into at least one flow channel inside a nozzle of an extruder to form at least one individual strand, (b) expanding the at least one individual strand to form at least one strand of foamed plastic material at the outlet of a nozzle, (c) forming a plurality of extruded foam boards each having the essentially the thickness (T) of the strand (S) of foamed plastic material, in particular by a cutting operation, which plurality of extruded foam boards in an attached manner form a foamed insulating panel so that the main surfaces M of the plurality of extruded foamed boards extend approximately in the thickness direction (t) of the foamed insulating panel.

According to a first alternative, forming the plurality of extruded foam boards is conducted by cutting the strand, and the plurality of extruded foam boards are subsequently attached to each other on their main surfaces M to form the foamed insulating panel. Otherwise, several cutting steps may be applied so as to form the plurality of extruded foam boards prior to attaching them to each other.

Accordingly, a method for forming a foamed insulating panel, in particular an extruded polystyrene board, according to the first alternative comprises the steps: directing a plastic melt into at least one flow channel inside a nozzle of an extruder to form at least one individual strand, expanding the at least one individual strand to from at least one strand of foamed plastic material at the outlet of a nozzle, cutting the strand of foamed plastic material for forming a plurality of extruded foam boards, and attaching the plurality of extruded foam boards on their main surfaces M to each other so that the main surfaces M of the plurality of extruded foam boards extend approximately in the thickness direction of the foamed insulating panel.

Preferably, the mentioned method steps are conducted in a throughput run, and the plurality of extruded foam boards are rotated around approximately 90° about an axis extending in the width direction of each of the plurality of extruded foam boards prior to attaching the plurality of extruded foam boards to each other. The reorientation of the plurality of extruded foam boards in a throughput run reduces the production time for each of the foam insulating panels.

According to a different approach of the present invention, the forming the plurality of extruded foam boards is performed with a plurality of prepared foam boards attached to each other. In other words, a first step of cutting the strand of foamed plastic material is used for preparing the so-called prepared foam boards (= horizontally extending panels), and these prepared foam boards are attached to each other at their large surfaces (L x W). As a result a so-called Horizontal Multilayer Board (HMB) is formed. The plurality of extruded foam boards are then formed in a subsequent step by cutting the already attached prepared foam boards, i.e. by cutting the Horizontal Multilayer Board (HMB) to size. The length of each piece which is obtained by cutting the Horizontal Multilayer Board (HMB) to size coincides with the thickness (t) of the Vertical Sandwich Boards (VSB).

The method of forming a foamed insulating panel, in particular an extruded polystyrene board, according to the different approach comprises the steps: directing a plastic melt into at least one flow channel inside a nozzle of an extruder to form at least one individual strand, expanding the at least one individual strand to form at least one strand of foamed plastic material at the outlet of the nozzle, cutting the strand of foamed plastic material so as to provide prepared foam boards, attaching the prepared extruded foam boards on their large surfaces (L x W, see Fig. 2) in order to obtain Horizontal Multilayer Boards (HMB), and forming, in particular by cutting, the plurality of extruded foam boards out of the prepared foam boards (= HMB) so that the main surfaces of the plurality of extruded foam boards extend approximately in the thickness direction (t) of the foamed insulating panel.

In a preferred embodiment, the already attached plurality of extruded foam boards is rotated around approximately 90 degrees after forming the foamed insulating panel.

The described alternative methods may also be used in combination so as to form a foamed insulating panel. Further, single aspects of one method may be applied to the other alternative. In particular, the method according to the first alternative may also provide the step of rotating the plurality of extruded foam boards around approximately 90 degrees after forming the foamed insulating panel.

Independent of the selected alternative of manufacturing inventive foamed insulating boards, the so-called VSB-board (the foamed insulating panel) has a lower λ-value in direction of the thickness (t) compared to the λ-value of the plurality of extruded foam boards respectively measured in the direction of the thickness direction (T). Additionally higher R values can be obtained by increasing the thickness of the foamed insulating panel.

In a further embodiment, an adhesive / glue or a solvent is applied to at least one of the main surfaces of the plurality of extruded foam boards to be attached together, preferably on both surfaces to be attached together.

Preferably, the skin of the stabilized standard XPS board is removed prior to cutting the small boards (L1a, L1b, L1c, L1d). Additionally, the edges of the small boards may be trimmed. Thereby, cuboid shaped panels (L x W x T) are achieved.

In a method step following the forming of the plurality of extruded foam boards to each other, an additional extruded horizontally extending foamed board may be attached to the surface(s) which are formed by the plurality of long narrow faces, i.e. the top long narrow and / or bottom long narrow surfaces of extruded foam boards (1a, 1b, 1c, 1d, 11a, 11b, 11c, 11d, 11e, 11f, 11g) . In other words, at least one of the large surfaces (L x W) of the additional extruded foam board is attached to a large surface (Lfp x W; L = Lfp) of the foamed insulating panel (= VSB), the large surface being formed by the long narrow surfaces of the plurality of extruded foam boards. The additional extruded foam board is an insulating foamed panel being produced in a conventional XPS process, i.e. the length of the additional extruded foam board extends in extrusion direction (see direction A, Fig. 1 and Fig.2). This means the length of the additional extruded (L) foam board corresponds with the total length of the VSB (Lfp) (see Figures 3b and 3c).

In one preferred embodiment, one additional extruded foam board is used for reinforcing the foamed insulating panel. In another embodiment, an additional extruded foam board is attached to both the top and bottom large surface of the foamed insulating panel (VSB). In further modifications, more than one additional extruded foam board may be attached to the large surface or large surfaces of the foam insulating panel. Alternatively, a final panel comprises a sandwich structures with alternating a VSB and an additional horizontally extending foam board. A final insulating panel of this type, might for instance, comprise a first additional horizontally extending foam board as a bottom layer, being attached to a first VSB, the first VSB being attached to a second additional horizontally extending foam board (= the middle layer), the second additional horizontally extending foam board being attached to a second VSB and the second VSB being attached to a third additional horizontally extending foam board, which forms the top layer of such structure. Both the additional horizontally extending foam board and the VSB are respectively attached to each other by bringing their large surfaces in contact with each other. The top large surfaces of the additional horizontally extending foam board mates respectively with the bottom large surface of a VSB.

In a further embodiment of the present method, at least one small surface of the final foamed insulating panel is heat treated, preferably by using a heat treating roller. The insulating panel and the heat treating roller are moved relatively to each other.

A foamed insulating panel described above or produced by a method outlined above is in particular useful for insulating buildings, because such a panel has a relatively high thermal resistance. On the other hand, the classification of the panel with respect to fire and compressive strength is maintained. Other applications of inventive foamed insulating panels are in the field of insulating electronic devices, refrigerated chambers, whereas this enumeration is not meant to be restrictive.

### Brief description of the drawings

- Figure 1: illustrates a first alternative of a process of manufacturing an inventive VSB-panel
- Figure 2: illustrates a second alternative of a process of manufacturing an inventive VSB-panel
- Figures 3a-3c: illustrate several inventive embodiments of VSB-panels, wherein figure 3a refers to an example with VSB-panels, figure 3b refers to an embodiment with an additional horizontal cover layer, and figure 3c refers to another embodiment comprising cover horizontal layers applied on two large sides of the VSB-panel.
- Figure 4: refers to another embodiment of the present invention, wherein a VSB-panel according to figure 3a is surface treated (also referred to as skin treatment or heat treatment).
- Figure 5: refers to yet another embodiment, wherein a VSB-panel according to figure 3c is surface treated.
- Figure 6: illustrates the change of cell orientation according to the inventive process of manufacturing an inventive VSB-panel
- Figures 7a/7b: refer to prior art panels.
- Figures 8a - 8c: illustrates the dimensions and surface areas of a single small foamed board as one example of the plurality of extruded foam boards

### Detailed description of the preferred embodiments of the present invention

Figure 1 illustrates an example of manufacturing a VSB-panel according to one embodiment of the present invention.

In a first step, a continuous strand S of extruded foam board is produced by performing a conventional XPS (XPS = extruded polystyrene) process. This method for producing thermoplastic plastic foam panels, especially extruded polystyrene panels, comprises the steps of feeding foamable plastic material for foaming a plastic melt to an extruder 100 and generating a plastic melt therein. This plastic melt is blow agent loaded. The blowing agent might be carbon dioxide CO2 and/or hydrofluorocarbon HFC and it enables the expansion (foaming process) of the melt to form a micro-cellular foam structure. Following the extruder 100, the plastic melt is directed into a flow channel (not shown) to form a continuous strand S inside the nozzle 101 which is located downstream to the extruder 100. Further, the continuous strand S is expanded to form a strand S of foamed plastic material at the outlet 102 of the nozzle 101, which is also referred to as die (see Fig. 1, step "I"). In figure 1, the conveying direction is indicated with a corresponding arrow (see Fig. 1, arrow indicated with "A"), wherein the thickness T of the strand S is perpendicular to the conveying direction, and the length direction of the strand S is oriented in the conveying direction A.

In an optional step (see Fig. 1, step "II"), the strand S is cut along the width direction W using a cutting device 2a so that a standard XPS-board with the length L in conveying direction A is obtained. The width W of the standard XPS-board 1 is perpendicular to both the length direction L and the thickness T (see Fig. 1, step "II"). Before continuing with the next process step, the standard XPS-boards might be stored in order to stabilize those XPS-boards. During the stabilization phase, a gas exchange between the blowing agent (e.g. carbon dioxide CO2 and/or hydrofluorocarbon HFC) being trapped in the foamed panel and the ambient atmosphere can take place. In a next step the extrusion skins are removed and the edges are trimmed.

In a further step, the stabilized standard XPS panel 1 is cut along the width direction W using a cutting device 2b so that a plurality of extruded foamed boards 1a-1d with decreased lengths L1a-L1d are achieved (see Fig. 1, step "III").

Subsequently, each of the boards 1a-1d is rotated around an axis extending in a width direction W so that after the rotation the thickness direction T of the newly oriented boards 1a' to 1d' shown in Fig. 1 extends in the conveying direction (see arrow "A" in Fig. 1), while the length directions L1a-L1d of each of the boards 1a' - 1d' extend after the rotation in a direction perpendicular to the conveying direction and perpendicular to the width direction W. This means that the length directions L1a-L1d of each of the boards 1a' - 1d' before the rotation take the thickness direction t after the rotation. In other words, so-called single vertical boards 1a' - 1d' are achieved (see Fig. 1, step "IV").

In the next method step, a gluing device 3, e.g. a gluing roller, is moved in the width direction of the vertical boards 1a' 1d' so that the main surfaces M of each of the vertical boards 1a' - 1d' to be connected to each other is provided with an adhesive agent (see Fig. 1, step "V").

Alternatively, the joining of the vertical boards 1a' - 1d' can be achieved by solvent welding, spraying an adhesive on the main surfaces to be bonded or other suitable methods for applying adhesives, like distributing the adhesive at the main surfaces of each of the boards 1a-1d before the boards 1a-1d are reoriented in step "IV" by using a double-sided adhesive tape. Such alternative adhesive application methodology might comprise the step of distributing the adhesive at the main surfaces M of each of the boards 1a-1d before the boards 1a-1d are reoriented in step "IV" by unwinding a adhesive film from a paper roll .

The adhesive might be a reactive adhesive or a hotmelt adhesive. The adhesive might be applied in the form of a dispersion to be sprayed, a powder to be sprayed, or a film to be applied.

Alternatively the main surfaces of the plurality of vertical boards 1a' - 1d' are heated using a heating roller, which is used instead of gluing device 3 (but may have a similar shape), in order to make them at least partially beginning to melt.

Finally, the plurality of vertical boards 1a' - 1d' are connected to each other, for example by introducing a pressure in a direction perpendicular to the main surfaces (see Fig. 1, step "VI"). The pressure to be applied is preferably in the range between 0,1 and 2,7 MPa (1 to 27 bar).

Additional mechanical anchorage between the plurality of vertical boards 1a' to 1d' can be obtained by providing the boards with a tongue and groove structure provided in a width or length direction of each of the individual vertical boards 1a' - 1d'. In this case, a main surface of a first vertical board is provided with tongue which engages with a groove incorporated in the adjacent main surface M of a second vertical board. Providing the boards with such a tongue and groove structure may provide additional strength to the finalized VSB-panel. Alternatively the method of mechanical anchorage between the plurality of vertical boards 1a' to 1d' might be used without applying any additional material fit joining technology like gluing.

Figure 2 illustrates another example of manufacturing a VSB-panel according to a second embodiment of the present invention.

In a first step, a strand of extruded foam board is produced by performing a conventional XPS (XPS = extruded polystyrene) process. This method for producing thermoplastic plastic foam panels, especially extruded polystyrene panels, is described in detail above (see first example of manufacturing a VSB-panel according to the embodiment of Fig . 1). Again, once the blowing agent loaded plastic melt exits the outlet 102 of the nozzle 101, the continuous strand of plastic melt is expanded to form a strand of foamed plastic material (not shown in Fig. 2; this step corresponds with step "I" according to Fig. 1).

In figure 2, the conveying direction is indicated with a corresponding arrow (see Fig. 2, arrow indicated with "A"), wherein the thickness direction T of the strand is perpendicular to the conveying direction "A", and the length direction of the strand is oriented in the conveying direction.

In a next step, the strand is cut along the width direction W using a cutting device 2a so that a standard XPS-board 1 with the length L in conveying direction is obtained. The standard XPS-Board is also referred to as horizontal single board (HSB). The width W of the standard XPS-board 1 is perpendicular to both the length L and the thickness T of the horizontal single board (HSB).

This process step is not shown in Fig. 2 but it corresponds with step "II" according to Fig. 1. Before continuing with the next process step, the standard XPS-boards might be stored in order to stabilize those XPS-boards (as outlined for the embodiment according to Fig. 1).

During the stabilization phase, a gas exchange between the blowing agent (e.g. carbon dioxide CO2 and/or hydrofluorocarbon HFC) being trapped in the foamed panel and the ambient atmosphere can take place. In a next step the extrusion skins is removed and the edges are trimmed. It is understood that after this removal and trimming procedure the dimensions remain essentially the same. Therefore the dimensions are also referred to a length (L), width (W) and thickness (T) .

In a further step (Fig. 2, step I) a plurality of foamed standard XPS boards (L x W x T) are piled on top of each other and joined at their large surfaces with each other. The large surfaces (= top and bottom large surface) of each horizontally aligned standard XPS-board are defined by its length L multiplied by its width W. The bottom large surface of a first individual foamed horizontal board is joined with the top large surface of a second individual foamed horizontal board and so on.

The joining methodologies as described above and referring to step "V" for the embodiment in Fig. 1 can be applied in a corresponding manner for the joining procedure in step I for the second embodiment according Fig. 2. Finally, the plurality of horizontal single boards (HSB) are connected to each other, for example by introducing a pressure in a direction perpendicular to the large surfaces (see Fig. 2, step "II"). The pressure to be applied is preferentially in the range between 0,1 and 2,7 MPa (1 to 27 bar).

As a result a Horizontal Multilayer Board (HMB) is obtained which is defined by the length L, the width W and the height H, whereas the height H is approximately the sum of the thicknesses T of all assembled individual standard XPS-boards. The thicknesses T of the individual standard XPS-boards might be different, but they are preferentially the same.

Alternatively a co-extrusion manufacturing method can be applied as described e.g. in EP 2 397 303 A1, which comprises the following steps:
- feeding foamable plastic material for forming a plastic melt to an extruder and generating a plastic melt therein;
- directing the plastic melt into separate flow channels inside a nozzle, positioned downstream of the extruder, to form individual strands;
- expanding the individual strands to form strands (of foamed plastic material at the outlet of the nozzle and
- combining, preferably under pressure, the individual strands of foamed plastic material at their main surfaces to form a joined strand of foamed plastic material.

As a result a Horizontal Multilayer Strand (HMS) is obtained which is defined by an indefinite length in the conveying direction, the width W and the height H, whereas the height H is approximately the sum of the thicknesses T of all assembled individual standard XPS-boards. The thicknesses T of the individual strands might be different, but they are preferentially the same.

Optionally, the Horizontal Multilayer Strand (HMS) is cut along the width direction W using a cutting device so that a Horizontal Multilayer Board (HMB) with the length L in conveying direction is obtained. As a result, a Horizontal Multilayer Board (HMB) is obtained which is defined by the length L, the width W and the height H, whereas the height H is approximately the sum of the thicknesses T of all assembled individual strands. The thicknesses T of the individual strands might be different, but they are preferentially the same.

Before continuing with the next process step, the Horizontal Multilayer Board (HMB) might be stored in order to stabilize those XPS-boards (as outlined for the embodiment according to Fig. 1).

The following process steps (see Fig. 2, steps "III" to "VI") are the same, i.e. they do not depend on the way how the Horizontal Multilayer Board (HMB) has been obtained (i.e. either by piling up and joining horizontal standard XPS-boards (HSB) or using the co-extrusion technology to obtain Horizontal Multilayer Strands (HMS) first and cut them to length to achieve the Horizontal Multilayer Board (HMB) afterwards). For both alternatives manufacturing routes a Horizontal Multilayer Board (HMB) is obtained.

In a further step (Fig. 2, step "III"), the Horizontal Multilayer Board (HMB) is cut along the width direction W using a cutting device 2c so that a plurality of boards 11a-11g with decreased lengths L11a-L11g are achieved, whereas the lengths L11a-L11g extend in the conveying direction. As a result, a set of VSB-panels is achieved, whereas the length L11a-L11g correspond with the thickness t of the respective VSB-panel (Fig. 2, step "IV").

The cutting tool 2c might be a hot wire. A "cutting device" might be used which comprises a plurality of parallel arranged and operating (hot) wires (see Fig. 2 step "III"). Such a "complex cutting device" has the benefit of reduced cycle times for the cutting procedure.

Alternatively, a saw could be used. The saw might be designed as elongated saw blade which cuts the Horizontal Multilayer Board (HMB) along the width direction W by continuously penetrating the HMB in the height direction H. A saw shaped elongated blade could be also used which acts in a guillotine like manner. Otherwise, a disc saw could be used which cuts the Horizontal Multilayer Board (HMB) along the width direction W.

Alternatively a laser beam or a water jet might be used to cut the Horizontal Multilayer Board (HMB).

Any cutting principle (e.g. saw, laser beam or water jet) might be incorporated in a "complex cutting device" comprising a plurality of parallel arranged individual cutting tools, as been outlined above for "hot wire" cutting device.

As a result of the cutting procedure (Fig. 2, step "III") a set of VSB-panels (= final insulating panels) is obtained (Fig. 2, step "IV"), which are oriented so that the "large surfaces" of the VSB-panels extend in a direction perpendicular to the conveying direction ("A") and perpendicular to the width direction W.

In a further step (Fig. 2, step "V") the VSB-panels are separated from each other by introducing a space between the individual VSB-panels (= the final insulating panels) in conveying direction.

In an optional final step (Fig. 2, step "VI"), the individual VSB-panels (= the final insulating panels) might be rotated (by 90°) around an axis extending in a width direction W, so that the "long lateral side" (i.e. the length of the final foamed insulating panel (Lfp)) of the VSB-panel is orientated in conveying direction. After the rotation the initial thickness direction T of the newly oriented VSB panels 11a' to 11c' shown in Fig. 2 extends in the conveying direction (see arrow "A" in Fig. 2), while the length directions L11a-L11g of each of the VSB panels 11a' - 11g' extend after the rotation in a direction perpendicular to the conveying direction and perpendicular to the width direction W. This means that the length directions L11a-L11g of each of the VSB-panels 11a' - 11c' before the rotation take the thickness direction t after the rotation. This step of reorientation eases the transportation of the VSB-panels to a storage place.

Figure 3a illustrates a VSB-panel 4 having a plurality of individual vertical boards. The number of individual vertical boards depends on the size of the VSB-panel 4 to be achieved by connecting a plurality of individual vertical boards. The final thickness of the VSB can be also variable under demand, as it corresponds to the length of the individual vertical boards. The width of the final VSB panel can be also variable under demand.

Figure 3b illustrates a further embodiment of a panel, which in addition to the VSB-panel 4 comprises an additional extruded foam board 5 on the top or bottom side of the VSB-panel 4. The additional horizontally extending board 5 provided on a top or bottom side of the VSB-panel 4 may provide additional reinforcement to the finalized panel.

Figure 3c of the present application illustrates yet another embodiment of a finalized panel, wherein an extruded foam board 5 is provided on a top side of a VSB-panel 4, and another extruded foam board 6 is provided on a bottom of the VSB-panel 4. The orientation of the boards 5, 6 is identical, i.e. the thickness directions T of the boards 5, 6 extend in the thickness direction t of the VSB-panel. In other words, the boards 5, 6 are so-called horizontal boards. The horizontal boards might be attached by the same means and methodologies as described above for attaching the plurality of vertical boards at their main surfaces, i.e. by using an adhesive, a solvent and/or mechanical means.

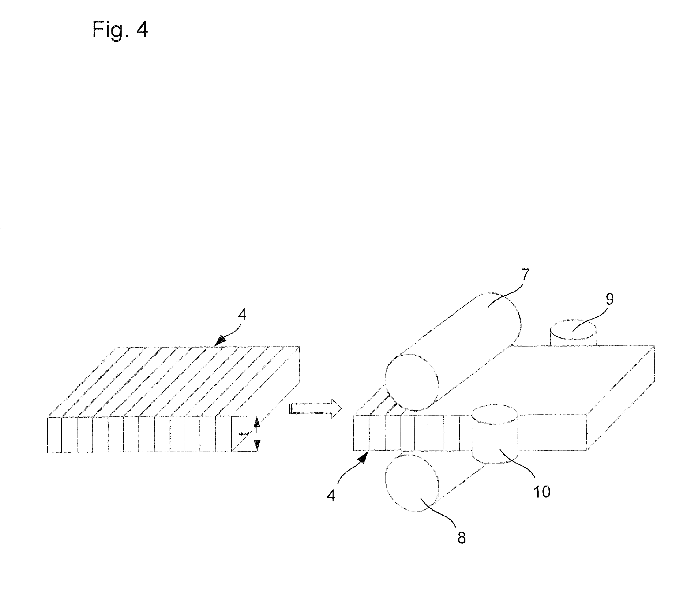

Figure 4 illustrates another example of a VSB-panel according to the present invention, wherein the VSB-panel 4 according to Figure 3a is additionally treated (a similar treatment is shown in Fig. 1 as step "VII"). Once the VSB-board 4 according to figure 3a, which may have been manufactured using a process as disclosed in figure 1 or figure 2 of the present application, has been achieved, an additional process step is applied so as to generate a skin-like surface on the visible surfaces using a heated rolling system. In particular, the VSB-board 4 is moved in the conveying direction, and passes several heating rollers. The heating rollers 7, 8 are disposed so that the large surfaces of the VSB-panel 4 are at least partially melted and pressed by the heating rollers. In order to achieve the heat treated surfaces to begin melting, the polystyrene surface to be treated should be preferentially heated up to a temperate ranging between 90 to 110°C.

After at least partially melting the large surfaces by moving the VSB-panel 4 relatively to the heating rollers 7, 8, - or the rollers 7, 8 relatively to the VSB-panel 4 - the melted portions are cooled via the ambient air or optionally via an additional cooling device so that a skin-like surface is achieved on the main surfaces of the VSB-panel 4. A skin-like surface is understood as a surface which appears to be as an uniform surface without showing any dividing lines of the individual vertical sandwich boards. After such treatment the VSB panel appears to be as one singular panel such that as it would not consist of a plurality of any subunits (= foamed segments). The existence and the type of assembly of the individual vertical boards is not visible, if the treatment has been applied to all surfaces of the final foamed insulating panel. To this end, the same procedure can be applied to the lateral surfaces of the VSB-panel, which are treated via heating rollers 9, 10, which extend in the thickness direction of the VSB-panel 4. Although not explicitly shown, the remaining two surfaces (lateral short surfaces) of the VSB-panel 4 may also be treated as described with respect to the large surfaces and the lateral long surfaces. This type of surface treatment as described above is also referred to as heat treatment or more generally as surface treatment. Any of those treatments result in uniform surfaces (as specified above) of the final insulating panel (see Fig. 1, step "VII").

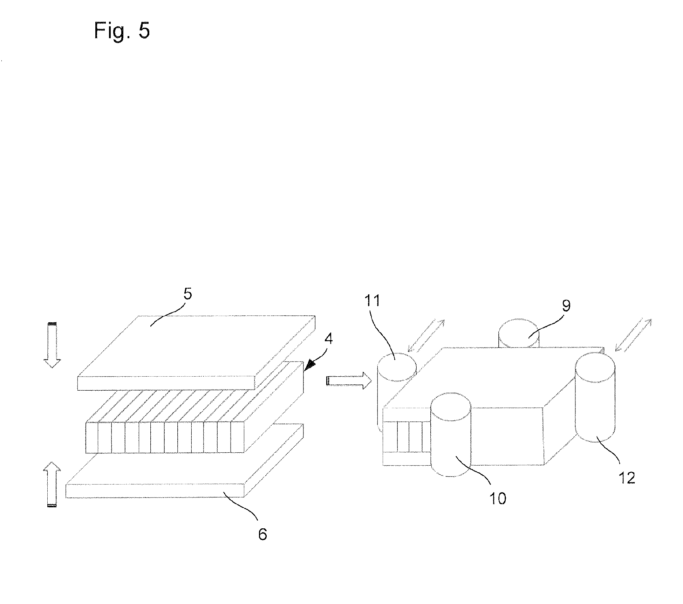

Figure 5 illustrates another process step similar to the process step described with respect to figure 4, which is applied to a final insulating board as shown in figure 3c of the present application. It will be well understood that such a process may also be applied to a panel as shown in figure 3b of the present application.

In the process illustrated in figure 5 of the present application, the large surfaces of the finalized panel are not treated by heat rollers, because the XPS-boards 5 and 6 already comprise a skin-like surface on the top and bottom side. Further, the vertical heating rollers 9, 10 are arranged in a similar way to the one shown in figure 4 in order to heat treat the long lateral surfaces. In addition, second vertical rollers 11, 12 are provided, which are arranged so that the second vertical heating rollers 11, 12 may be moved in the width direction of the panel for treating the lateral short surfaces of the panel.

Treating the lateral long surfaces of the panel in figure 5 can be conducted in a continuous process. Treating the lateral short surfaces of the panel in figure 5 can be conducted in a continuous process as well, if the conveying direction of the panel is changed to a direction perpendicular to the original conveying direction, i.e. in width direction. Otherwise, the vertical roller(s) 11, 12 may be arranged on a side of the conveying path of the panel, and the panel temporarily stops at a specified location so that the heating rollers 11, 12 may move in a direction perpendicular to the conveying direction and treat the one of the lateral short sides of the panel.

Specific tests have been carried out so as to prove the superior properties of a VSB-panel according to the present invention with respect to the standard XPS board and the conventional multilayer panels (horizontal panels).

### Example 1

In a first example, a VSB-panel as show in figure 3a of the present application having a thickness t of 100 mm has been compared with a standard (horizontal) XPS-board having a thickness of 100 mm. Such a standard XPS-board has a λ-value of 37.5 mW/m·K and a thermal resistance R of 2.7 m² K/W. Several specimens of VSB-boards have been produced, with varying thickness of the individual vertical boards (= starting panels). Both, inventive and standard horizontal XPS-boards (= reference samples) have been produced with CO2 as blowing agent.

In summary, the λ-value of a VSB-panel according to figure 3a of the present application could be reduced to λ =31.6-36.5 mW/m·K, which leads to an increased thermal resistance of R = 2.7-12.7 m² K/W.

Specific examples of tests conducted with different types of Horizontal Multilayer Boards (prior art) in comparison to VSB-panels according to the present invention are shown in the following tables 2 to 5.

Horizontal Multilayer Boards (in the following also referred to as HMB) according to the prior art are assembled by a plurality of foamed boards each having a length L, a width W and a thickness Ttotal, i.e. the sum of the thickness of the individual horizontal boards 1' , 1" , 1'" (see Fig. 7a/7b). The thickness Ttotal defines the overall thickness of the finalized board, which is ready for use.

The individual boards are arranged on top of each other and joined at their large surfaces, which are defined by their length L times their width W. The bottom large surface of a first individual foamed horizontal board is joined with the top large surface of a second individual foamed horizontal board and so on.

Table 1 shows how the horizontal multilayer boards (prior art), which are meant as reference examples have been prepared in order to arrive to a total thickness Ttotal of the final horizontal multilayer boards so that total thickness Ttotal thereof equal the total thickness t of the tested inventive final insulation panels which have been manufactured as VSB specimen.

In table 1 the individual horizontal boards and the individual vertical boards (1, 1', 1") are referred to as "starting panels". In other words the "starting panels" are the smallest sub-units which are assembled in a respective way to form the final panel.

In order to arrive to the required thickness of individual horizontal boards (= starting panels) the respective large surface (L x W) are machined (referred to as skin removal).

**Table 1a: Preparation (= machining) of the horizontal "starting panels" in order to arrive to the required total thickness of the HMB (= state-of-the-art panels (reference samples))**

| **HMB** | Thickness of the Starting Panels (SPs) [= state-of-the-art panels] | | |
|---|---|---|---|
| **↓ Total** **Board** **Thickness** **H = Ttotal** | 60 mm | 100 mm | 160 mm |
| **100 mm** | 2 layers of 50 mm (remove 10 mm from the skin of each SPs at the surfaces to be joined) | Do nothing: SP thickness = HMB thickness | remove 60 mm from one surface of 1 SP |
| **160 mm** | 2 outer layers of 55 mm and 1 inner layer of 50 mm are assembled (remove 5 mm from each outer SP at one surface and from both sides of the inner SP) | 2 layers of 80 mm (remove 20 mm from one surface of each of the 2 SPs) | Do nothing: SP thickness = HMB thickness |
| **200 mm** | 4 layers of 50 mm (remove 10 mm from one surface on the top and bottom SPs and 5 mm from both surfaces of the 2 inner SPs) | 2 layers of 100 mm (with skins) | 2 layers of 100 mm (remove 60 mm from the surface to be joined of each of the 2 SPs) |
| **300 mm** | 5 layers of 60 mm (with skin) | 3 layers of 100 mm (with skins) | 2 layers of 150 mm (remove 10 mm from the surface to be joined of each of the 2 SPs) |
| **400 mm** | 8 layers of 50 mm (remove 10 mm from one surface of the top and bottom SPs, and 5 mm from both surfaces of the 6 inner SPs) | 4 layers of 100 mm (with skins) | 2 layers of 150 mm and 1 inner layer of 100 mm (remove 10 mm from one surface of the top and bottom SPs and 30 mm from both surfaces of the inner SP) |

**Table 1b: Preparation (= machining) of the vertical "starting panels" in order to arrive to the required total thickness of the VSB (design according Fig. 3a)(= inventive panels)**

| **VSB** | Thickness of the Starting Panels (SPs) (= inventive panels) | | |
|---|---|---|---|
| **↓ Total** **Board** **Thickness** **t = Ttotal** | 60 mm | 100 mm | 160 mm |
| **100 mm** | **Cut the foamed strand to length (L1a, L1b, L1c etc.) which equal the thickness (t) of the final insulating panel (= total board thickness of the VSB). The VSB is assembled as shown in** **Fig. 1**. | | |
| **160 mm** | | | |
| **200 mm** | | | |
| **300 mm** | | | |
| **400 mm** | | | |

In order to arrive to the HBM assembly, i.e. state-of-the-art panels which serve as reference samples, the horizontal starting panels are fixed by mechanical clamping means.

In order to arrive to the VSB assembly according Fig. 3a, the vertical starting panels are joined by gluing at their main surfaces (L1a x W, L1a x W, etc.) as described above. The total length of the HMB reference samples is (300 mm) and it equals the total length of VSB. The total width of the HMB is (300 mm) and it equals the total width of VSB.

Table 2 refers to the λ-values measured in the thickness direction of panels assembled by using different starting panels. The table discloses the respective measurements for inventive VSB and multilayer horizontal boards (= state-of-the-art panels). Additionally a comparison of λ-values between inventive VSB and HMB (state-of-the-art samples) is displayed. Measurement of λ-values has been performed according UNE EN 13164.

**Table 2 λ-values [10⁻³W/m K = mW/m K) for VSB (inventive) and HMB (state-of-the-art) and comparison between HMB - VSB (design according to Fig. 3a) (λ-Measurement according UNE EN 13164)**

| λ [mW/m K]* | | Horizontal Multilayer Board (Final HMB Thickness) | | | | |
|---|---|---|---|---|---|---|
| | ↓Thickness of SPs | 100 mm | 160 mm | 200 mm | 300 mm | 400 mm |
| Starting panels (SPs) | 60 mm | 33.9 | 33.9 | 33.9 | 33.9 | 33.9 |
| | 100 mm | 36.4 | 36.4 | 36.4 | 36.4 | 36.4 |
| | 160 mm | 39.2 | 39.2 | 39.2 | 39.2 | 39.2 |

| | | **Vertical Sandwich Board Panel** (Final VSB Thickness) | | | | |
|---|---|---|---|---|---|---|
| | Thickness of SPs | **100 mm** | **160 mm** | **200 mm** | **300 mm** | **400 mm** |
| Starting panels (SPs) | 60 mm | **31.6** | **31.6** | **31.6** | **31.6** | **31.6** |
| | 100 mm | **32.4** | **32.4** | **32.4** | **32.4** | **32.4** |
| | 160 mm | **36.5** | **36.5** | **36.5** | **36.5** | **36.5** |

| Difference HMB - VSB | | | | | | |
|---|---|---|---|---|---|---|
| | Thickness of SPs | 100 mm | 160 mm | 200 mm | 300 mm | 400 mm |
| Starting panels (SPs) | 60 mm | 2.3 | 2.3 | 2.3 | 2.3 | 2.3 |
| | 100 mm | 4.0 | 4.0 | 4.0 | 4.0 | 4.0 |
| | 160 mm | 2.7 | 2.7 | 2.7 | 2.7 | 2.7 |

The measurements show that the λ-values for inventive VSBs are generally smaller than for HMB (= state-of-the-art). If the thickness of the starting panels is selected between 60 to 160 mm λ-values of VSB between 31.6 and 36.5 [mW/m K] can be achieved. An optimum of the λ-values for VSB is obtained if starting panels have a thickness of approximately 60 mm. In this case the λ-value of the VSB is 31.6 [mW/m K].

Table 3 refers to R-values calculated on the basis of the measurement results mentioned in table 1 above. The table discloses the respective measurements for inventive VSB and state-of-the-art multilayer horizontal boards (HMB). Additionally a comparison of R-values between inventive VSB and state-of-the-art HMB is displayed. Calculation of R-values has been made by using λ-values which have been measured according UNE EN 13164. The formula for the R-Value calculation is: R=d/λ

**Table 3 R-values [m²K /W] for VSB (inventive) and HMB (state-of-the-art) and comparison between HMB - VSB (design according to Fig. 3a)**

| R-value (m² K/W) | | Horizontal Multilayer Board (Final HMB Thickness) | | | | |
|---|---|---|---|---|---|---|
| | Thickness of SPs | 100 mm | 160 mm | 200 mm | 300 mm | 400 mm |
| Starting panels (SPs) | 60 mm | 2.9 | 4.7 | 5.9 | 8.8 | 11.8 |
| | 100 mm | 2.7 | 4.4 | 5.5 | 8.2 | 11.0 |
| | 160 mm | 2.6 | 4.1 | 5.1 | 7.7 | 10.2 |

| | | **Vertical Sandwich Board Panel** (Final VSB Thickness) | | | | |
|---|---|---|---|---|---|---|
| | Thickness of SPs | **100 mm** | **160 mm** | **200 mm** | **300 mm** | **400 mm** |
| Starting panels (SPs) | 60 mm | **3.2** | **5.1** | **6.3** | **9.5** | **12.7** |
| | 100 mm | **3.1** | **4.9** | **6.2** | **9.3** | **12.3** |
| | 160 mm | **2.7** | **4.4** | **5.5** | **8.2** | **11.0** |

| Difference HMB-VSB | | | | | | |
|---|---|---|---|---|---|---|
| | Thickness of SPs | 100 mm | 160 mm | 200 mm | 300 mm | 400 mm |
| Starting panels (SPs) | 60 mm | -0.2 | -0.3 | -0.4 | -0.6 | -0.9 |
| | 100 mm | -0.3 | -0.5 | -0.7 | -1.0 | -1.4 |
| | 160 mm | -0.2 | -0.3 | -0.4 | -0.6 | -0.8 |

The measurements show that the R-values for inventive VSB are generally higher than for state-of-the-art HMB. Among the selected starting panel specifications, a thickness of the starting panels around 100 mm, leads to differences regarding R-values of state-of-the-art HMB and inventive VSB between - 0.3 and -1.4 [m² K/W] . Increasing the total thickness of the VSB and the state-of-the-art HMB leads also to an increase in the differences between VSB and HMB. For example, the differences in R-values for HMB compared to VSB, each with a total thickness of 100 mm, are -0.2 [m² K/W] (SP = 60 mm), - 0.3 [m²K /W] (SP = 100 mm) and -0.2 [m²K /W] (SP = 160 mm). On the other hand, the differences in R-values for state-of-the-art HMB compared to inventive VSB, each with a total thickness of 400 mm, are -0.9 [m²K /W] (SP = 60 mm), -1.4 [m²K /W] (SP = 100 mm) and -0.8 [m²K /W] (SP = 160 mm) .

The evaluations illustrated in tables 2 and 3 above demonstrate the superior properties of VSB-panels according to the present invention with respect to conventional multilayer horizontal panels.

### Example 2

In yet another test phase, VSB-panels as shown in figure 3c of the present application have been evaluated. In this case the final insulating panel is designed as sandwich structure comprising a VSB-panel in the center and two horizontal layers.

A first horizontal layer is attached to the "top large surface" and a second horizontal layer is attached to "bottom large surface" of the VSB-panel. The single vertical boards are cut to length (L1a, L1b, L1c etc.) of 40 mm. After rotating the individual vertical boards by 90° in the upright position and attaching the single vertical boards at their main surfaces a VSB-panel of 40 mm thickness t is obtained. The two additional foamed XPS layers have thickness T of 30 mm each. After assembling the VSB-panel (40 mm) and the two horizontal layers (30 mm each), a sandwich structure according to Fig. 3c is obtained, whereas the overall thickness Ttotal of this sandwich panel is 100 mm. The thickness T of the single vertical boards is in a first embodiment 100 mm and in a second embodiment 30 mm.

Once again, the reference was a standard (horizontal) XPS-board (in the following also referred to as a state-of-the-art Horizontal Single Board (HSB)) having a thickness of 100 mm and a λ-value of 37.5 mW/m·K (thermal resistance R = 2.7 m²K/W). Several different specimens have been produced as shown in figure 3c of the present application. The λ-values of these inventive specimens are within a range of 33.7-33.9 mW/m·K. The R-values of these inventive specimens are within a range of 2.9 -3.0 m² K/W. Table 4 and 5 show the respective λ-and R-values of the investigated samples.

**Table 4 λ-values (mW/m K) for VSB (inventive) and HSB (state-of-the-art) and comparison between HSB - VSB (design according to Fig. 3c) (λ-Measurement according UNE EN 13164)**

| λ [mW/m K] | | Horizontal Single Board (Thickness of HSB = 100mm) |
|---|---|---|
| | | 37.5 |
| | | **Vertical Sandwich Board Panel** (Final VSB Thickness) |
| Starting panels (SPs) | Thickness of SPs | **VSB Panel = 40 mm thickness "t"** **2 horizontal layers; 30 mm thickness each** |
| | 30 mm | 33.9 |
| | 100 mm | 33.7 |

| Difference HMB - VSB | | |
|---|---|---|
| Starting panels (SPs) | Thickness of SPs | |
| | 30 mm | -3,6 |
| | 100 mm | -3.8 |

**Table 5 R-values (m²K/W) for VSB (inventive) and state-of-the-art HSB and comparison between HSB - VSB (design according to Fig. 3c)**

| R-value (m K/W) | | Horizontal Single Board (Thickness of HSB = 100mm) |
|---|---|---|
| | | 2.7 |
| | | **Vertical Sandwich Board Panel** (Final VSB Thickness) |
| Starting panels (SPs) | Thickness of SPs | **VSB Panel = 40 mm thickness "t"** **2 horizontal layers; 30 mm thickness each** |
| | 30 mm | 2.9 |
| | 100 mm | 3.0 |

| Difference HMB - VSB | | |
|---|---|---|
| Starting panels (SPs) | Thickness of SPs | |
| | 30 mm | **0.2** |
| | 100 mm | **0.3** |

The inventive effect of obtaining reduced λ-values and increased R-values - in comparison with state-of-the-art horizontal single or multilayer boards - is not limited to the examples presented above. In particular, there is no constraint regarding the total thickness of the final foamed insulating panel comprising VSB-panels, i.e. also final foamed insulating panels with a thickness higher than 400 mm can be obtained, whereas the advantage of reduced λ-values and increased R-values can be still obtained.

## Claims

1. Foamed insulating panel, in particular extruded polystyrene panel, the foamed insulating panel comprising:
a plurality of extruded foamed boards having main surfaces (M) and narrow surfaces (N1, N2), wherein the plurality of extruded foam boards are joined on the main surfaces (M) to each other,
**characterized in that**
the main surfaces (M) of the plurality of extruded foamed boards extend approximately in the thickness direction (t) of the foamed insulating panel.

2. Foamed insulating panel according to claim 1, **characterized in that** an additional extruded foam board (5, 6) is attached to the narrow surfaces (N1, N2), in particular long narrow surfaces (N1), of each of the joined plurality of extruded foam boards, wherein the additional extruded foamed board (5, 6) has preferably a smaller thickness than the length (L1a-L1c) of each of the joined plurality of extruded foam boards.

3. Foamed insulating panel according to any of the preceding claims, **characterized in that** the thickness (T) of each of the joined plurality of extruded foam boards is within a range of 10-200 mm, preferably of 30-160 mm, wherein the thickness (t) of the foamed insulating panel is preferably greater than 100 mm, most preferably in the range of 100-400 mm.

4. Foamed insulating panel according to any of the preceding claims, **characterized in that** the plurality of extruded foam boards are achieved from at least one strand (S) of the same thickness (T).

5. Foamed insulating panel according to any of the preceding claims, **characterized in that** the foamed insulating panel comprises a skin-treated surface at least on one small surface thereof and/or the foamed insulating panel comprises a skin-treated surface at least on one of the large surface thereof.

6. Foamed insulating panel according to any of the preceding claims **characterized in that** the plurality of extruded foam boards are joined on the main surfaces (M) to each other by using an adhesive, a solvent and/or mechanical means, and/or at least several of the plurality of extruded foam boards comprise a tongue and/or groove on their main surfaces (M).

7. Method for forming a foamed insulating panel according to any of the preceding claims, in particular an extruded polystyrene board, comprising the steps:
(a) directing a plastic melt into at least one flow channel inside a nozzle (101) of an extruder (100) to form at least one individual strand;
(b) expanding the at least one individual strand to form at least one strand (1) of foamed plastic material at the outlet (102) of the nozzle (101);
(c) forming a plurality of extruded foam boards each having the thickness of the strand (1) of foamed plastic material, in particular by a cutting operation, which plurality of extruded foam boards in an attached manner form a foamed insulating panel so that the main surfaces (M) of the plurality of extruded foamed boards extend approximately in the thickness direction (t) of the foamed insulating panel.

8. Method according to claim 7, wherein forming the plurality of extruded foam boards is conducted by cutting the strand (S) of foamed plastic material, and the plurality of extruded foam boards are subsequently attached to each other on their main surfaces to form the foamed insulating panel wherein the method steps are preferably conducted in a throughput run, and the plurality of extruded foam boards are in particular rotated around approximately 90 degrees about an axis extending in the width direction of each of the plurality of extruded foam boards prior to attaching the plurality of extruded foam boards to each other.

9. Method according to any of claims 7-8, wherein an adhesive or a solvent is applied to at least one of the main surfaces (M) of the plurality of extruded foam boards to be attached together, preferably on both main surfaces to be attached together.

10. Method according to claim 7, wherein forming the foamed insulating panel is conducted by cutting the plurality of already prepared and attached extruded foam boards (HMB).

11. Method according to claim 10, wherein the already attached plurality of extruded foam boards are rotated around approximately 90 degrees after forming the foamed insulating panel.

12. Method according to any of claims -10-11, wherein an adhesive or a solvent is applied to at least one of the large surfaces of the plurality of already prepared foam boards to be attached together, preferably on both large surfaces to be attached together.

13. Method according to any of claims 7-12, wherein the skin of the strand (S) of foamed plastic material is removed and/or the edges of the strand (1) are trimmed prior cutting the strand, and/or wherein an additional extruded foamed board (5, 6) is attached to narrow surfaces (N1, N2), in particular long narrow surfaces (N1), of the plurality of extruded foam boards.

14. Method according to any of claims 7-13, wherein at least one small surface and/or large surface of the foamed insulating panel is heat treated, and wherein the foamed insulating panel is preferably moved relatively to a heat treating roller (7-10) and/or a further heat treating roller (11, 12) is moved relatively to the foam insulating panel.

15. Use of a foamed insulating panel according to any of claims 1-6 for insulating buildings, wherein one of the large surfaces of the foamed insulating panel is attached to a wall of the building or for refrigerating chambers, wherein one of the large surfaces of the foamed insulating panel is attached to a wall of the refrigerating chamber, or for insulating electronic devices or packaging.
